# EUROPEAN PATENT APPLICATION

(11) **EP 2 008 612 A1**
(43) Date of publication of application: **31.12.2008**
(21) Application number: 06755315.6
(22) Date of filing: 18.04.2006
(51) Int. Cl.: A61C 8/00

(54) **IMPROVED DENTAL IMPLANT**

(71) Applicant: Garcia Saban, Francisco Javier, 08211 Castellar del Valles, Barcelona (ES); Garcia Saban, Juan Carlos, 08211 Castellar del Valles, Barcelona (ES); Garcia Saban, Miguel Angel, 08211 Castellar del Valles, Barcelona (ES)
(72) Inventor: Garcia Saban, Francisco Javier, 08211 Castellar del Valles, Barcelona (ES); Garcia Saban, Juan Carlos, 08211 Castellar del Valles, Barcelona (ES); Garcia Saban, Miguel Angel, 08211 Castellar del Valles, Barcelona (ES)
(74) Representative: Carpintero Lopez, Francisco
(86) International application number: PCT/ES2006/000185
(87) International publication number: WO 2007/118909

(57) **Abstract**

The invention relates to an improved dental implant used for replacing teeth, basically comprising a conical head (2) and a threaded central body (3) finished at the lower part in an apical tip (4) in which the lower area of said head (2) has microthreads (14) and the upper area has a hexagonal shape forming a step (5) with a chamfered edge (6) facilitating the coupling and support of the prosthetic components connected to the implant (1), said head (2) in turn having a cavity (7) extended at the lower part, formed by a truncated cone with a larger upper base and an inner lower hexagon, facilitating the inner coupling and support of the prosthetic components.

## Description

### Object of the Invention

As indicated in the title, the present invention patent application consists of a dental implant of the type replacing missing teeth.

More specifically, the object of the present invention is a one-piece dental implant the design of which on one hand facilitates its insertion in the bone area and on the other hand facilitates greater stability and self-retaining force, or in other words, less movement between the implant and bone tissue.

### Backaround of the Invention

Dental implantology techniques are currently very widespread, frequently used and accepted by professionals and patients. Said techniques allow replacing dental roots by means of implants to which the corresponding prostheses are in turn coupled.

In both cases, the implants used must meet fundamental stability requirements in each of the following implantation stages:
1) Initial implantation stage
2) Immediate subsequent stage once the osseointegration time has elapsed, in which step said stability must be such that it prevents the rotation of the implant; and
3) Step of fixing the prosthesis and setting the implant to work.

For the purpose of meeting the mentioned requirements, the features of said implants will in turn depend on the actual implant system which could basically be threaded or friction-fitted, the threaded type currently prevailing.

Nevertheless, the implants used up until now occasionally have a number of drawbacks and also do not satisfactorily meet the mentioned stability requirement. Specifically, said implants usually have design and operation drawbacks such as the occurrence of rotation between the implant and the prosthesis, occurrence of stress and deformation in the coupling, defective mechanical energy transmission in the mastication function due to implant heads that are too small, occurrence of design discrepancies between the crown and the root, incorrect adjustments decreasing the necessary torque for a loosening to occur, anti-rotational single connection design between the implant, pillar and prosthesis, which generates stress accumulation in a single plane, etc.

### Description of the Invention

The invention described below solves the previously indicated drawbacks, while at the same time it maintains a high degree of functionality.

To that end, the implant of the invention is structured from a single body formed by a conical head extended at the lower part in a threaded cylindrical central body which in turn ends or is finished at the lower part by means of an also conical apical tip.

The upper area of this conical head has a hexagonal shape the diameter of which between faces and edges is beveled or chamfered, continuing in an angular manner with an also beveled or chamfered step until the maximum diameter of the head of the implant or upper frustoconical base, to facilitate the coupling and support of the prosthetic components connected to the implant.

A cavity aligned at its center with the axial axis of the implant has been provided inside said head, which cavity extends at the lower part in a truncated cone with a larger upper base and smaller lower base, extending at the lower part in a hexagonal area in turn extending by means of a threaded cavity that is also aligned in relation to the axial axis of the implant, to retain the pillar of the prosthesis.

In addition, upon machining the alveolar socket which will be used to house the implant, such orifice has a diameter equal to the inner diameter of the outer thread of said implant or, in other words, to the diameter of the core, so that as it is introduced, the thread of the cylindrical area is embedded, ensuring the attachment.

For this reason, for the purpose of preventing deformation or breakage in the cortical area or opening of the orifice when an additional tightening torque is exerted after threading the implant, the shape of the head of said implant has a taper such that its smaller diameter, which will contact the mentioned opening, will be less than or equal to that of the core or inner diameter of the thread of the central body.

In addition, for the purpose of further ensuring the stability and fixing of the implant and preventing its rotation once it has been threaded, such implant has been provided with microthreads located at the lower part of the conical head in which the threaded central body begins. These microthreads complement said fixing with the gap closing and sealing action at the bone cortical level, the upper plane level of such microthreads further being established as the bone loss limit during the functioning time of the implant and its prosthesis.

In addition to providing a larger contact surface and better stability as already explained, said microthreads further ensure a suitable fixing in the cortical area of the bone, where the bone is denser, leaving the action of the thread with larger pitch in the central body for the lower part of the bone, which has a higher porosity.

Finally, a series of recesses facilitating the self-insertion of the implant in the alveolar socket are made at the lower end of the central body of the implant and in its apical area.

All of the above results in an implant with correct osseointegration and stress distribution during mastication, a better maintenance of the functional state and seating inside the alveolar bed, which leads to minimizing bone loss around the implant and its regeneration, decreasing the risks of an atrophic process and a suitable recovery of the mastication, phonetic, aesthetic and metabolic function.

### Description of the Drawings

To complement the description which is being made and with the aim of aiding to better understand the features of the invention according to a preferred practical embodiment thereof, a set of drawings is attached as an integral part of said description in which the following has been shown with an illustrative and non-limiting character:

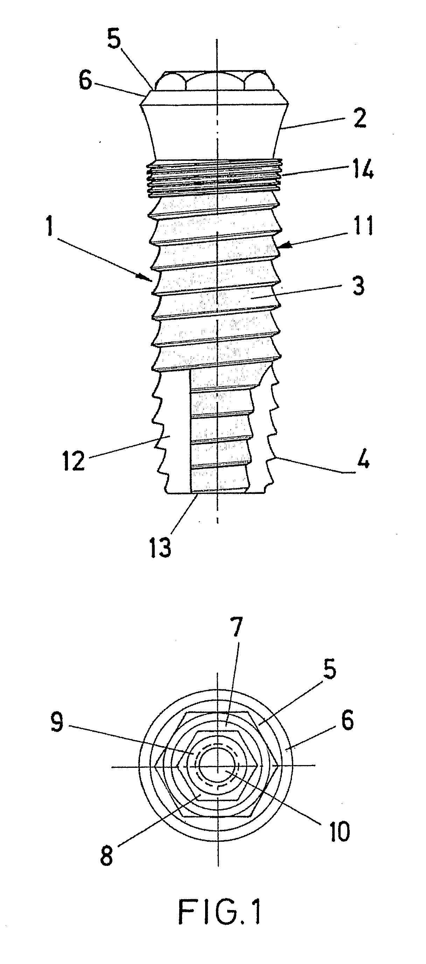

Figure 1 shows an elevational view and its respective plan view of the implant of the invention.

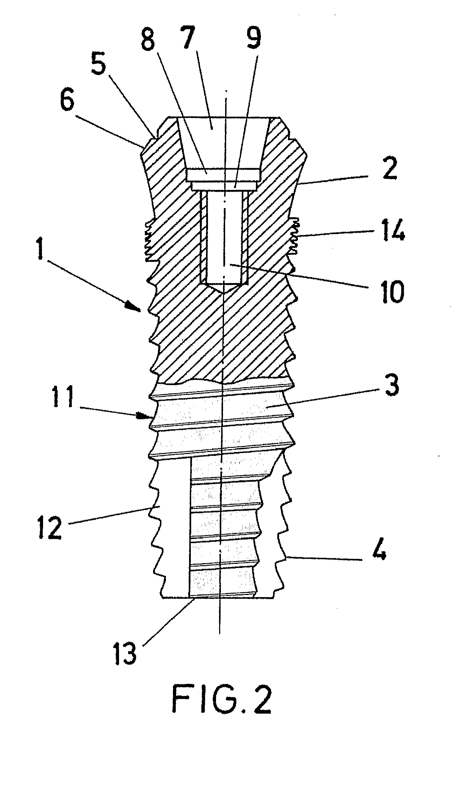

Figure 2 shows a partial section of the elevational view of the previous figure.

### Preferred Embodiment of the Invention

In view of the indicated figures, these figures show an embodiment of the implant (1) of the invention, basically consisting of a conical head (2) and a threaded cylindrical central body (3) finished at the lower part in a conical apical tip (4).

As can be seen in the figure, the upper area of the conical head (2) has a hexagonal shape with a diameter such that it forms a step (5) with a chamfered edge (6) facilitating the outer coupling and support of the prosthetic components connected to the implant (1).

The cavity (7) with a frustoconical configuration aligned at its center with the axial axis of the implant (1) has been provided inside the head (2), which cavity extends at the lower part in a hexagonal area (8) in turn extending at the lower part in another cylindrical area (9) with a smaller diameter, which in turn extends at the lower part in a threaded cavity (10) that is also aligned in relation to the axial axis of the implant (1), facilitating the inner coupling and support of the prosthetic components.

The central body (3) of the implant (1) is in turn externally affected by a thread (11), having at its lower area recesses or indentations (12) made at 120º to facilitate the threaded insertion in the artificial alveolar socket, not shown, said central body (3) ending in an apical tip (4) which is finished in a planar base (13).

As has already been stated, for the purpose of preventing deformations when a complementary tightening torque is carried out, the shape of the head (2) of said implant (1) has a taper such that its smaller diameter will be less than or equal to the inner diameter of the mentioned thread (11) of the central body (3).

Located at the lower area of the head (2), and before the thread (11) of the central body (3) begins, the implant (1) is provided with microthreads (14) intended to prevent rotation and increase stability as explained above.

Additionally, in order to further improve the friction and therefore the resistance to rotation, the implant (1) of the invention can be subjected to an acid bath in the central body (3), in the microthreads (14) or in both.

## Claims

1. An improved dental implant for replacing teeth, comprising a conical head (2) and a threaded central body (3) finished at the lower part in an apical tip (4), **characterized in that** in the lower area of the head (2) it has microthreads (14) intended to prevent rotation and increase stability and contact surface.

2. An improved dental implant according to claim 1, **characterized in that** the smaller diameter of the head (2) is less than or equal to the inner diameter of the thread (11) of the threaded central body (3).

3. An improved dental implant according to the previous claims, **characterized in that** the upper area of the conical head (2) has a hexagonal shape forming a step (5) with a chamfered edge (6) facilitating the coupling and support of the prosthetic components connected to the implant (1).

4. An improved dental implant according to the previous claims, **characterized in that** the head (2) has a cavity (7) with a frustoconical configuration, extending at the lower part in a hexagonal area (8) in turn extending at the lower part in another cylindrical area (9) with a smaller diameter, which in turn extends at the lower part in a threaded cavity (10).

5. An improved dental implant according to claim 4, **characterized in that** the cavity (7), the hexagonal area (8), the cylindrical area (9) and the threaded cavity (10) are aligned at their center in relation to the axial axis of the implant (1).

6. An improved dental implant according to claim 1, **characterized in that** the central body (3) has in its lower area recesses or indentations (12) for facilitating the insertion in the alveolar socket.

7. An improved dental implant according to claim 6, **characterized in that** the recesses or indentations (12) are made at 120º to one another.

8. An improved dental implant according to claim 1, **characterized in that** the apical tip (4) is finished in a planar base (13).
